# EUROPEAN PATENT APPLICATION

(11) **EP 4 202 745 A1**
(43) Date of publication of application: **28.06.2023**
(21) Application number: 21217522.8
(22) Date of filing: 23.12.2021
(51) Int. Cl.: G06F 21/62

(54) **IMPROVEMENTS IN DATA LEAKAGE PREVENTION**

(71) Applicant: Barclays Execution Services Limited, London E14 5HP (GB)
(72) Inventor: FRENCH, George, Bedford, MK41 7HL (GB); GOLDSTONE, Jeremy, Prestwich, M25 0FU (GB)
(74) Representative: Carpmaels & Ransford LLP

(57) **Abstract**

This disclosure is in the field of data leakage prevention and relates to computer-implemented methods for identifying data leakage and for enabling identification of data leakage, and data processing apparatus, computer programs, and computer readable storage media for performing the same. There are provided computer-implemented methods of constructing and querying a first Bloom filter, formed from a plurality of representations of sensitive data, wherein the plurality of representations have been generated from underlying sensitive data using a mapping function.

## Description

### Field of Invention

The present invention relates to computer-implemented methods and devices for identifying and/preventing data leakage, including methods and devices for constructing a data structure from one or more data items containing sensitive data, and methods and devices for using such a thus-constructed data structure to identify an instance of potential data leakage, for example, at an endpoint of an organisation's network where data is in transit.

### Background

"Data leakage" in general refers to the exposure of sensitive data (which has originated within, or has been entrusted to, an organisation) to any unauthorised actor or entity. This exposure may occur accidentally or unintentionally, e.g. through a technical fault or human error. Alternatively, data may "leak" as a deliberate consequence of malicious actions carried out by an insider of the organisation or an external attacker. When data which is potentially sensitive leaves the boundary of the organisation's computer system, or moves from a higher-security context to a lower-security context, it is advantageous to perform checks for any leakage of sensitive data.

By way of an illustrative example, a computing system of an organisation may be configured to perform data processing using personal data generated by and/or received from individuals who are not part of the organisation. Some or all of this personal data may be sensitive personal data, the privacy of which the organisation has a moral and legal responsibility to protect. Examples of sensitive personal data may include (but are not limited to) financial information, e.g. payment card data, contact details e.g. telephone number and email data, customer name and/or address data and so forth.

Frequently, such systems comprise multiple separate environments in which computer software may be developed, tested and executed, to mitigate the risk of errors introduced by unstable, incomplete or unreliable software being executed in the "production" environment (i.e. the environment in which updates are finally pushed out to real end users, and software becomes responsible for the processing of genuine customer data). Typically, at least one other environment (e.g. a "development" environment") may be employed for developing, refining and testing software prior to its deployment in the production environment. Of course, there may be two, three, four or any other suitable number of "non-production environments".

Whilst the production environment will obviously use real customer data, a development environment (commonly associated with a lower degree of security) may work with "artificial" or "dummy" data to populate databases and test functionality without risking a catastrophic data breach, should credentials to the development environment be misused. This leads to the existence of one environment containing a potentially very large volume of sensitive "genuine" customer data, and one environment containing a potentially very large volume of non-sensitive "artificial" customer data; data leakage may occur if genuine data becomes exported or used in place of artificial data, e.g. due to conflation of genuine and artificial records.

Since storing a complete record of all possible sensitive data is generally considered to be unrealistic for a system of any real size at present (due to the unreasonably high memory requirements this would seemingly demand), many existing data protection and/or management tools operate on the basis of heuristics and/or "pattern matching". These prior approaches are typically directed to abstractions of the data to be protected, or general underlying properties of the data to be protected, rather than looking for the real data itself. One example of such a heuristic may be the application of a Luhn check to a numeral value, to test whether the numeral value could potentially be a payment card number such as a PAN.

However, there are numerous problems associated with these known approaches. For example, heuristic-based approaches can result in a high frequency of false positives and a high incidence of mis-categorising data. Systems in which only (or primarily) generalised properties about sensitive data are stored, rather than the real sensitive data itself, may fail to spot this sensitive data when it appears in a different context.

Additionally or alternatively, prior art systems may apply rules, heuristics, patterns and/or tests in an excessively "rigid", "strict" or "literal" manner, and thus may not permit a sufficient degree of flexibility in how an element of sensitive data might appear in a different context. Trivial syntactic changes to an element of sensitive data which do not substantially alter its semantic content (for example, the use of alternative formats for an instance of sensitive data, or a re-ordering of elements of sensitive data within the same data item (e.g. a record)) may go unnoticed by these prior systems.

A further problem with heuristics is that there may be cases in which it is actually desirous for artificial data to resemble real sensitive data in terms of form and appearance - for example, in a pre-production testing environment for software that processes payment card numbers, there may be formatting requirements imposed on data, and thus artificial card numbers which nevertheless pass Luhn checks may be employed. In such a case, the use of a Luhn check as a DLP heuristic, would evidently trigger many false positive alerts.

It is the aim of the present invention to solve the aforementioned problems and other problems associated with current techniques for data leakage prevention.

### Summary

In a first aspect of the invention, there is provided a computer-implemented method for identifying data leakage, comprising: receiving a first Bloom filter formed from a plurality of representations of sensitive data, wherein the plurality of representations have been generated from the underlying sensitive data using a mapping function; receiving a data item for determination as to its sensitivity; extracting candidate data from the data item; generating one or more representations from the extracted candidate data, using the mapping function; and for each representation of the one or more representations: performing a membership query for the representation in the first Bloom filter; and, in accordance with a positive result of the membership query, outputting an alert signifying that the data item may be a sensitive data item.

A technical benefit of using the first Bloom filter is that the actual sensitive data itself can be used in the DLP process, eliminating the need to rely on heuristics and pattern-matching. This is made possible by the fact that the first Bloom filter stores and retrieves the real sensitive data with a high probability of success (i.e. a low rate of false positive matches), but requires significantly less space in memory to do so than would be needed to store all of the sensitive data in a more traditional (non-probabilistic) form.

A further technical benefit of using the first Bloom filter is that, whilst it will sometimes produce false positives in response to a membership query, it will never produce a false negative. This consequently means that the same is generally true of the DLP method defined by claim 1 as a whole (i.e. there may be false positives brought about by the data structure employed, but no false negatives), which is a highly desirable property in the technical field of data leakage prevention. If an instance of potential leakage is found, it can be flagged for further investigation by another computer program or system, or by a human operator, and resolved one way or the other with relative ease. On the other hand, if real leakage is allowed to go undetected, the legal, regulatory, privacy, security and/or financial consequences for an organisation may be highly significant. The first Bloom filter therefore produces the advantageous effect of reducing memory requirements without producing false negatives (undetected instances of data leakage).

A yet further technical benefit of the first Bloom filter is that it adds a layer of security, privacy and/or anonymity to the DLP process, because the "contents" of the first Bloom filter (that is, the representations of sensitive data which were used to form the first Bloom filter) cannot be determined from the first Bloom filter itself. If an attacker is able illicitly to obtain the first Bloom filter itself, they will still be unable reliably to compute the representations of sensitive data directly, and hence will not be able to reverse engineer and compute the sensitive data itself directly either.

At best, an attacker may attempt to compute a representation of sensitive data which was used to form the first Bloom filter by "brute force", e.g. by procedurally enumerating (or randomly guessing) representations until one is found which returns a positive result when queried against the first Bloom filter. However, as will be appreciated by those skilled in the art, the computational complexity of such an attack makes it unlikely to find a positive result within a reasonable time for all but the "fullest", most "densely-populated" instances of the first Bloom filter. Even in these cases, the attack will not be effective, because the false-positive of the first Bloom filter will have grown so high that the attacker will not be able to say with any confidence whether the representation they are querying is a genuine member of the first Bloom filter (i.e. part of its contents, one of the representations used to form it) or merely a false positive. In this way, the use of the first Bloom filter produces the effect of thwarting brute force attacks, as well as direct recovery of sensitive data, should the first Bloom filter become compromised. The alert output as a result of the membership query can only signify that the data item *may* be a sensitive data item, because a membership query of a Bloom filter cannot produce a positive result with one hundred percent certainty. However, this result is still useful from the point of view of reducing data leakage, because the only other outcome of the membership query is a negative result which is obtained with one hundred percent certainty. Thus, not obtaining a negative result of the membership query can be used to instruct further investigative steps.

In a similar vein, the security properties of the first Bloom filter (its essential "one-way-ness") advantageously allow it to be shared with various vendor scanning tools such as data discovery, proxy, data auto-classification tools, email data classification and the like, without compromising the security of the sensitive data.

A technical benefit of generating *representations* of extracted sensitive/candidate data for insertion into the first Bloom filter, rather than inserting the sensitive/candidate data itself, is that it creates an additional layer of security, privacy and/or anonymity to the DLP process, since no "raw" sensitive data is used in the formation of the first Bloom filter. This benefit is particularly substantial in embodiments where the nature of the mapping function makes it difficult or impossible to use knowledge of a representation of some sensitive data to recover the sensitive data itself - for instance, if the mapping function hashes, scrambles, obfuscates, disperses, randomises, compresses, encodes, encrypts or digests its input.

Mapping functions which produce a unique representation for each input, or at least have a low "collision" rate (i.e. a low incidence of two or more distinct elements of sensitive data mapping to the same representation) produce the technical benefit of reducing the incidence of false positives when the method of the present invention is carried out, because the likelihood of non-sensitive data being mapped to a representation that returns a positive result when queried against the first Bloom filter is reduced.

A technical benefit of extracting the sensitive data (or potentially-sensitive, "candidate" data) from the data item is that it enables the identification of data leakage *even when this sensitive data appears in a new or different context.* For example, any given data item may contain a (potentially large) amount of non-sensitive data in addition to the sensitive data it contains. Methods that are predicated on the identification of a whole data item at a time may fail to spot instances of leakage whereby only the sensitive data "leaks", e.g. if a data item which contains the same sensitive data (but in which the non-sensitive data has been added to, removed from, modified or reordered) is accessed by an unauthorised party and/or becomes exported from the organisation.

In a further aspect of the invention, there is provided a computer-implemented method for enabling identification of data leakage, comprising: receiving a data item; identifying sensitive data within the data item; extracting the identified sensitive data from the data item; generating a representation from the extracted identified sensitive data using a mapping function; and constructing a first Bloom filter from the representation.

Constructing the first Bloom filter in accordance with the second aspect of the invention enables data leakage to be identified. Advantageously, the method provides a memory efficient data structure, which facilitates efficient queries to identify data leakage (for example, by the use of a method according to the first aspect of the invention).

Optionally, in either aspect, it may be the case that each representation generated using the mapping function comprises an output of the mapping function, wherein: the mapping function maps inputs to bit strings; the mapping function maps inputs to character strings; or the mapping function maps inputs to numbers; optionally wherein the mapping function comprises a hash function. A mapping function comprising a hash function is advantageous because it can produce well-dispersed outputs with a low collision rate, and/or because it can make it difficult to compute sensitive data used as inputs to the mapping function based on the representations produced as outputs of the mapping function. These effects are beneficial for the reasons discussed above.

Moreover, a mapping function comprising a hash function allows more than one element of data from a data item (e.g. multiple fields from a row or record of a table/database, or multiple portions of an unstructured data item such as a document) to be mapped to a single representation, e.g. by concatenating the data together and then hashing the result. This allows relationships between the elements in a data item to be taken into account when identifying data leakage, because *combinations* of elements can be checked against the first Bloom filter, rather than just individual fields (say). For example, it may be determined by a user of the present invention that, whilst the first name of one customer may not constitute an example of "sensitive data" in and of itself, the combination of this first name with the same customer's surname, house number, street name, postcode and/or telephone number may, *taken together*, be sensitive.

Optionally, in either aspect, each representation generated using the mapping function comprises an output of the mapping function, and the mapping function maps inputs to secondary Bloom filters, optionally wherein the mapping function produces each secondary Bloom filter from the candidate and/or sensitive data by inserting it into an empty Bloom filter. A mapping function which maps inputs to secondary Bloom filters (e.g. by inserting its inputs into an empty Bloom filter) is advantageous because it can produce well-dispersed outputs with a low collision rate, and/or because it can make it difficult to compute sensitive data used as inputs to the mapping function based on the representations produced as outputs of the mapping function. Again, these effects are beneficial for the reasons discussed above. Effectively, two steps of guesswork are required to determine the sensitive data from the first Bloom filter.

A further benefit to the use of secondary Bloom filters for representations of sensitive (or candidate) data is that the order in which sensitive/candidate data appears in (or is extracted from) a data item will not affect its representation. Creating a secondary Bloom filter representation by inserting n elements of data will, advantageously, produce the same result irrespective of the order of insertion. The technical benefit of this is that a set of sensitive data which appears within the organisation in a new or altered context will not be missed by the data leakage identification process, because re-ordering of the extracted candidate data will not affect its representation as a secondary Bloom filter (and hence the representation will still return a positive result when queried against the first Bloom filter).

Optionally, in either aspect, the method may further comprise: in accordance with a negative result of the membership query for all of the representations, indicating no membership of the representations in the first Bloom filter, sending the data item and/or extracted candidate data to another computer via a network.

Optionally, in either aspect, the method may further comprise one or more of: saving the first Bloom filter to a memory; distributing the first Bloom filter to another computer via a network; or retrieving the first Bloom filter in response to a user request.

Optionally, in either aspect, the data item comprises structured data, and extracting data from the data item comprises extracting a one or more fields from the structured data using an extraction function based on a known mapping. This enables the extraction of one or more predetermined sets of fields, according to which fields or combinations of fields are determined by a user to comprise "sensitive" information.

Optionally, in either aspect, the data item comprises unstructured data, and extracting data from the data item comprises extracting a one or more fields from the unstructured data using one or more filters based on regular expressions. This enables sensitive or potentially-sensitive data automatically to be pulled out of the data item based on one or more known or expected patterns which may be predetermined by a user.

Optionally, in either aspect, each representation generated from the extracted data corresponds to one of the plurality of fields. Optionally and alternatively, in either aspect, each representation generated from the extracted data corresponds to more than one field of the plurality of fields.

Optionally, in said further aspect, constructing the first Bloom filter from the representation comprises either: constructing an empty Bloom filter and populating it by inserting the representation into the empty Bloom filter; or updating an existing Bloom filter by inserting the representation into the existing Bloom filter.

If the first Bloom filter does not yet exist, then constructing an empty Bloom filter and populating it by inserting the representation into the empty Bloom filter produces the effect of creating the first Bloom filter such that it contains at least one representation, thus enabling it to be used thereafter to identify data leakage. If there already exists a candidate for the first Bloom filter, the further aspect of the invention can produce the effect of adding a further representation into the existing candidate so that the number of representations which will potentially return a positive result to a membership query increases, improving the Bloom filter's usefulness for identifying data leakage. When constructing a "new" Bloom filter, it is not necessary to insert the representation into a completely empty new filter in order to realise the benefits of the present invention (e.g. a Bloom filter with some bits set to one could be used as the starting point in place of the empty Bloom filter). However, using an empty Bloom filter as the starting point may be advantageous because it may reduce the rate at which false positives occur when querying the first Bloom filter.

Optionally, in either aspect, the method may further comprise, prior to generating the representation or representations: canonicalizing the extracted data; normalising the extracted data; and/or formatting the extracted data.

A technical benefit of canonicalizing/normalising/formatting extracted data prior to generating representations is that it enables sensitive data still to be identified using the invention, even where said sensitive data appears within a system in a different context, format, layout, configuration, or so forth. Advantageously, minor syntactic changes to sensitive data which do not substantially alter its semantic content will not cause sensitive data to be missed in the context of the present invention when the extracted data is canonicalised, normalised and/or formatted.

In a yet further aspect of the invention, there is provided a computer-implemented method for identifying data leakage, comprising the steps of the first aspect and the steps of the further aspect, wherein the mapping functions are the same mapping function, and the first Bloom filters are the same Bloom filter.

In a still yet further aspect of the invention, there is provided a data processing apparatus comprising a processor configured to perform the steps of any preceding aspect.

In an even still yet further aspect of the invention, there is provided a computer program comprising instructions which, when the program is executed by a computer, cause the computer to carry out the steps of any one of the above-mentioned methods.

In a more even still yet further aspect of the invention, there is provided a computer-readable storage medium having stored thereon the above-mentioned computer program.

### Brief Description of the Drawings

The present invention has been described below purely by way of example with reference to the accompanying drawings in which:
Fig. 1 is a component diagram of an exemplary system in which the invention may be implemented to detect and/or prevent data leakage;
Fig. 2 is a component diagram of an exemplary computing device, which may be employed as one of the computing devices of Fig. 1;
Fig. 3A illustrates a process comprising two "insert" operations being performed on a Bloom filter;
Figs. 3B-3D illustrate three examples of "query" operations being performed on the same Bloom filter of Fig. 3A;
Figs. 4A and 4B each illustrate examples of sensitive data being extracted from a structured data item, using a mapping/projection;
Fig. 4C illustrates a canonicalisation/normalisation/formatting operation for a field of the data item of Figs. 4A and 4B;
Fig. 5 illustrates an example of sensitive data being extracted from an unstructured data item, using a regular expression (regex) filter;
Fig. 6A depicts an example of a hash-based mapping function producing representations from data;
Figs. 6B and 6C depict examples of a Bloom-filter-based mapping function producing a representation from data;
Fig. 7A graphically depicts an example of generating/updating a master Bloom filter using a data item, in accordance with an embodiment of the present invention;
Fig. 7B graphically depicts an example of querying a master Bloom filter using a data item, in accordance with an embodiment of the present invention;
Fig. 8 is a flowchart of a computer-implemented method for enabling identification of data leakage, in accordance with an embodiment of the present invention; and
Fig. 9 is a flowchart of a computer-implemented method for identifying data leakage, in accordance with an embodiment of the present invention.

### Detailed Description

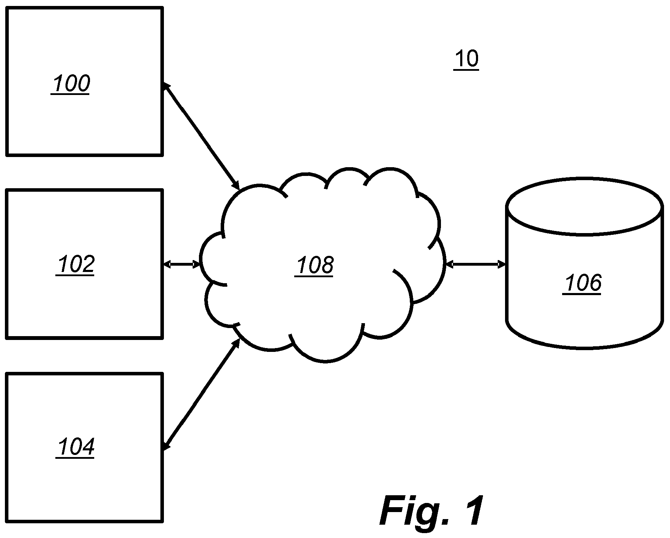

Referring to Fig. 1, there is provided a computing system 10 in which data leakage may potentially occur. The system 10 comprises terminals 100, 102, 104 and a database 106, each of which are communicatively coupled with each other via a suitable network 108. In one exemplary embodiment, network 108 is the internet, although it will be recognised by those skilled in the art that the present invention may be deployed in relation to other suitable networked configurations of terminals 100, 102, 104 and database 106 that may exist. For example, terminals 100, 102, 104 and database 106 may be coupled instead by a local area network (LAN); a personal, home, storage, campus, metropolitan, wide or global area network (PAN/HAN/SAN/CAN/MAN/WAN/GAN, respectively); a private network such as an enterprise private network (EPN) or virtual private network (VPN); a backbone network; or any other suitable network.

Additionally or alternatively, terminals 100, 102, 104 and/or database 106 need not all be directly connected to network 108, and indeed some or all of the devices may be connected only to one another. Additionally or alternative, more than one network 108 may be employed to communicatively couple terminals 100, 102, 104 and/or database 106.

System 10 is depicted with one database 106 and three terminals 100, 102, 104, but the skilled person will recognise that other systems may employ any suitable number of terminals 100, 102, 104 and databases 106.

System 10 is depicted with terminals 100, 102, 104 and database 106 being bilaterally coupled to network 108; that is, double-ended arrows are used to represent terminals 100, 102, 104 and database 106 being configured both to transmit data to network 108, and to receive data from network 108. Nevertheless, the skilled person will recognise that the present invention is equally applicable in systems wherein some or all of the connections between terminals 100, 102, 104 and/or database 106 and network 108 are unilateral, i.e. wherein one or more of terminals 100, 102, 104 and/or database 106 are configured either only to transmit data to network 108, or only to receive data from network 108.

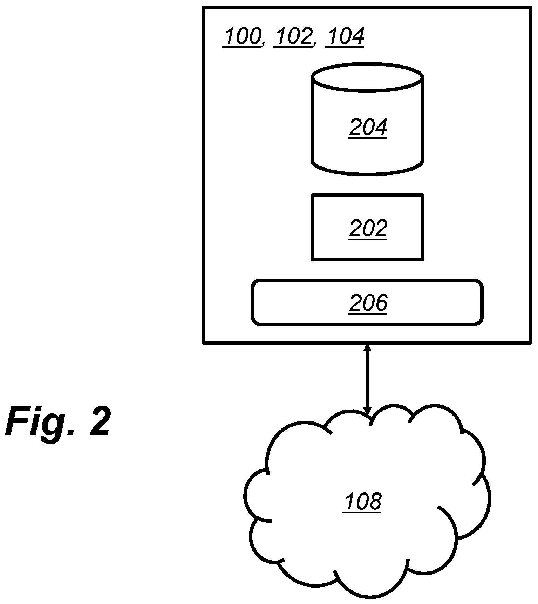

A terminal (purely by way of example, and without loss of generality, terminal 100) may be configured to perform any one or more of the computer-implemented methods for enabling identification of data leakage described herein, using suitable computing device hardware features such as some or all of those described below in connection to Fig. 2. Where a given method for enabling identification of data leakage described herein comprises receiving a data item, the data item may be retrieved from a storage location within terminal 100. Additionally or alternatively, the data item may be retrieved from another terminal 102, 104 or from database 106 (either directly, or indirectly via network 108). The terminal 100, and indeed the terminals 102 and 104, may be any computational device configured to perform computer-implemented methods as described herein. For example, a terminal may comprise a processor, or any other hardware suitable for performing the methods described herein, as will be appreciated by a person skilled in the art.

Where a given method for enabling identification of data leakage described herein comprises a step of saving, retrieving or distributing a Bloom filter, this may be performed either locally on the hardware of terminal 100 or remotely in relation to another terminal 102, 104 and/or database 106 (either directly, or indirectly via network 108). In some embodiments, methods for enabling identification of data leakage described herein comprise a step of retrieving an existing Bloom filter from another terminal 102, 104 and/or database 106, and constructing a first Bloom filter from a representation by updating the existing Bloom filter. The methods described herein may comprise, but need not necessarily comprise, transmitting the constructed Bloom filter to the same terminal or database from which the existing Bloom filter was received.

As an illustrative example, a terminal executing code in a "production" environment that is configured to receive and/or process genuine sensitive data (e.g. private data pertaining to users or customers) may be configured to perform one or more of the computer-implemented methods for enabling identification of data leakage described herein, in order to assist the detection and/or prevention of data leakage in, from, or by system 10.

A terminal (again, purely by way of example, and without loss of generality, terminal 100) may be configured to perform any one or more of the computer-implemented methods for identifying data leakage described herein, using suitable computing device hardware features such as some or all of those described below in connection Fig. 2. Where a given method for identifying data leakage described herein comprises receiving a first Bloom filter, the first Bloom filter may be retrieved from a storage location within terminal 100. Additionally or alternatively, the first Bloom filter may be retrieved from another terminal 102, 104 or from database 106 (either directly, or indirectly via network 108).

Where a given method for identifying data leakage described herein comprises receiving a data item, the data item may be retrieved from a storage location within terminal 100. Additionally or alternatively, the data item may be retrieved from another terminal 102, 104 or from database 106 (either directly, or indirectly via network 108). Where a given method for identifying data leakage described herein comprises a step of saving, retrieving or distributing a Bloom filter, this may be performed either locally on the hardware of terminal 100 or remotely in relation to another terminal 102, 104 and/or database 106 (either directly, or indirectly via network 108).

As an illustrative example, a terminal executing code in a "development", "pre-production" or "testing" environment that is configured to receive and/or process non-sensitive data (e.g. "artificial" or "dummy" data used for testing or experimentation) may be configured to perform one or more of the computer-implemented methods for identifying data leakage described herein, in order to detect and/or prevent of data leakage in, from, or by system 10. Additionally or alternatively, a terminal configured to export data outside of an organisation's network (and/or configured to transmit data from any higher-security environment to any lower-security environment) may be configured to perform one or more of the computer-implemented methods for identifying data leakage described herein.

Whilst methods for identifying data leakage and methods for enabling identification of data leakage have been discussed separately above, it will be recognised by those skilled in the art that none of terminals 100, 102, 104 need necessarily be limited to the execution either of methods for identifying data leakage or of methods for enabling identification of data leakage. For the avoidance of doubt, any terminal 100, 102, 104 may be configured to perform either or both of the above kinds of method. In some embodiments, a terminal comprising suitable hardware and software features (e.g. multiple CPU cores, multithreading, and the like) may be configured to perform both kinds of method concurrently and/or in parallel. Additionally or alternatively, such a terminal may be configured to perform multiple instance of the same kind of method concurrently and/or in parallel.

Whilst terminals 100, 102, 104 and database 106 are illustrated in Fig. 1 as separate entities for the sake of greater conceptual simplicity and clarity, it will be appreciated by those skilled in the art that, in practice, the same physical device may play the part of both a terminal and a database. For example, database 106 may reside within the same computing device as terminal 100, terminal 102 and/or terminal 104. Moreover, an entity which is represented in Fig. 1 as a single terminal or a single database may, in practice, be embodied as a plurality of distinct computing devices, said plurality fulfilling the role of the terminal or database by using algorithms or techniques for distributed processing or distributed storage.

In various embodiments, other data used in performing the steps of the present invention may be stored in database 106 or any other suitable computing device (preferably which is communicatively coupled with network 108). For example, database 106 may be used to store one or more of the maps, filters, projections, regular expressions or the like that are used to extract sensitive or potentially-sensitive data in accordance with the present invention. Additionally or alternatively, routines or processes for the normalisation, canonicalisation or formatting of data in accordance with embodiments of the present invention may be stored and retrieved from a database (e.g. database 106). Myriad other patterns and paradigms for distributing the processing, communication and/or storage aspects associated with various concrete implementations of the present invention will be apparent to those skilled in the art.

Referring now to Fig. 2, components of a computing device such as terminal 100 are depicted, including a processor 202, memory 204 and communication interface 206. The processor 202 is configured to obtain computer executable code from the memory 204 and execute the computer executable code to perform the processes described herein. Terminals 102 and 104 of system 10 may likewise each also be configured with the same type of components in the same fashion as depicted in Fig. 2. In various embodiments, a computing device with features identical or similar to those depicted in Fig. 2 may also be used to implement database 106 of system 10.

In some embodiments, any one or more of terminals 100, 102, 104 (and/or database 106) may additionally be configured with components for user interaction such as a display and/or a user input device configured to receive user input into processor 202 (e.g. a mouse, keyboard, trackball, joystick or any other suitable device). However, it will be recognised that such user-facing features are by no means necessary in order to realise the benefits associated with the present invention.

Any data described as being stored in one or more of the computing devices disclosed herein may be stored in hardware which is easily accessible by processor 202, such as in memory 204. The data may be held in ROM or RAM, or held in and retrieved from a solid state or hard disk drive, or stored externally and retrieved via a network such as network 108 using communication interface 206. Other technical means of storing data and retrieving it for use by processor 202 will be evident to those of ordinary skill in the art.

It will be appreciated that the transmission of data among components of system 10 may occur in a variety of specific ways, many of which are essentially functionally equivalent for the purposes of the present invention. For example, data may be transferred from one computing device to another computing device over a network such as network 108 via "push"-style proactive sending steps by the transferring device, or via "pull"-style steps carried out on the processor of the receiving device, such as repeated polling of the transferring device to determine whether new data is available and ready to be transferred. Networking may be implemented using a layered model such as the TCP/IP model in accordance with any suitable set of selected application, transport, internet and data link layer protocols as will be known to those skilled in the art.

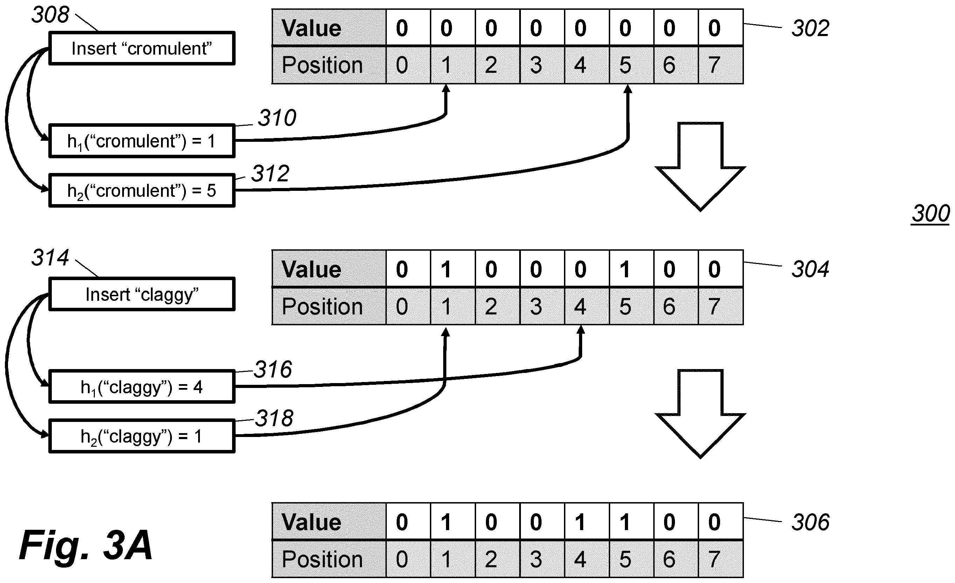

Referring now to Fig. 3A, several exemplary instances 302, 304, 306 of a Bloom filter are depicted for the purposes of illustration. A Bloom filter consists of a fixed-size array of binary digits ("bits") which is associated with one or more hash functions. At each position within the array is a bit, which at any given time is set to either the value 1 (True), or the value 0 (False). Each hash function maps inputs to positions in the bit array. Typically, the one or more hash functions comprise at least two hash functions. Typically, the at least two hash functions are all distinct. Because integers (and indeed all numbers) are stored on a computing system's hardware as arrays of bits, the skilled person will recognise that for the purpose of producing an array position as output, hash functions with a bit array output may be used (with this array being converted to an array position by a suitable mapping). Equally, it will be possible to adapt, to the task of producing array positions, hash functions whose outputs are (e.g.) strings of bits; numbers in base 2, base 8, base 10, base 16 or any suitable base; arrays of characters (strings); or arrays or strings of bytes. Likewise, the equivalence between arrays and strings of bits, bytes or characters will be known to those skilled in the art and so these terms may at times be used interchangeably in the present disclosure for the purposes of illustration.

Preferably, some (and most preferably, all) of the hash functions produce a uniformly-distributed output. That is, each hash function should map inputs as evenly as possible over the set of array positions, so that each position output is generated by the hash function with roughly the same probability. Preferably, some (and most preferably, all) of the hash function are independent. That is, there should be minimal correlation between outputs of each hash function for any given input; given an output of one hash function for a particular input, the outputs of other hash functions for the same input should still all be equally likely (or as close as can reasonably be achieved). Preferably, the hash functions are efficient, in the sense that their outputs can be computed in polynomial time, and most preferably can be computed in a time which is upper bounded by a low-degree polynomial expression in the size of their input.

The term "Bloom filter" is used herein to refer specifically to the bit array itself. For example, the phrase "sending the Bloom filter from A to B" as used herein would refer to sending a bit array from A to B, but not sending the associated set of hash function definitions (unless explicitly specified). Wherever multiple processes or computing devices are described in the present disclosure as performing operations on the same Bloom filter, it will be understood by those skilled in the art that the hash functions associated with that Bloom filter are known to (i.e. stored on or retrievable by) all of the processes or computing devices. For example, terminals 100, 102, 104 and/or database 106 may each store all of the hash functions for the first Bloom filter as described herein.

In the present disclosure, the term "Bloom filter" is used to refer to a mutable bit array whose contents are subject to change as operations are performed thereupon, but which nevertheless retains a thread of continuity linked by these operations. In other words, as used herein, the contents of a Bloom filter (i.e. the bits at the various array positions) may have different values at different times, and may change e.g. when an element is "added to" or "inserted into" the Bloom filter. In the present disclosure, a specific "snapshot" of a Bloom filter at a given point in time (i.e. a single specific array of bits) is referred to as an "instance" or "state" of a Bloom filter. In some places herein, "Bloom filter" may be used as shorthand for "instance/state of a/the Bloom filter", though it will be clear from the surrounding context when this convention is being employed.

A Bloom function supports at least two operations - an "insert" or "add" operation which takes, as input, an element, and "stores" the element in the Bloom filter as described in more detail below; and a "query" operation which takes, as input, an element, and "checks" the Bloom filter for the element as described in more detail below.

An insert operation, given an input element, applies each of the one or more hash functions associated with the Bloom filter to said input element to produce one or more array positions (one array position per hash function associated with the Bloom filter). For each array position that is produced, the value of the bit in that array position is set to 1 (True). If the value of the bit in that array position is already 1, it remains at 1.

A query operation, given an input element, applies each of the one or more hash functions associated with the Bloom filter to said input element to produce one or more array positions (one array position per hash function associated with the Bloom filter). If the array contains a value of 1 at all of the array positions that are produced, then the query returns a positive output. Otherwise (i.e. if the array contains a value of 0 at any of the produced positions), the query returns a negative output.

As will be appreciated by those skilled in the art, if an element is "inserted" into a Bloom filter then querying that element for the Bloom filter will always return a positive output, irrespective of how many other insertion operations have been performed in the meantime. Querying an "empty" (all zeros) Bloom filter will always return a negative output, and querying a "full" (all ones) Bloom filter will always return a positive output. The more bits a Bloom filter has set to a value of 1 (i.e. the more "full" it is), the more likely a randomly-selected query is to return a positive result, and vice versa.

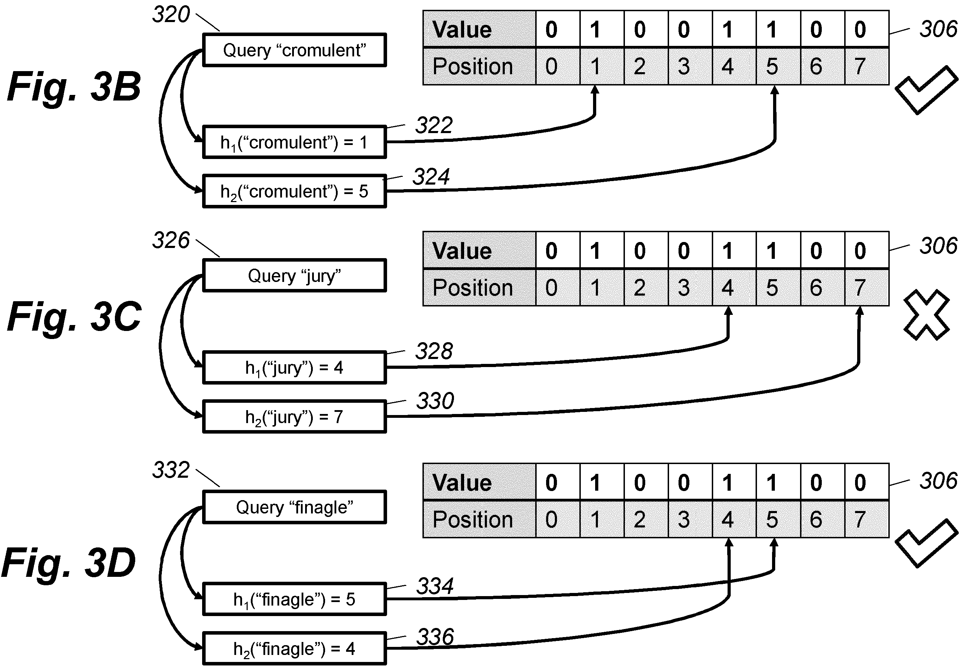

Crucially, if querying an element in an (initially-empty) Bloom filter returns a negative output, it can be determined with certainty that the element has at some point been inserted into the Bloom filter (i.e. the Bloom filter "contains" the element). However, the converse is not necessarily true - if querying a particular element returns a positive output, the element might never have been inserted into the Bloom filter, as will be illustrated in more detail with reference to Fig. 3D.

Several variants of the Bloom filter data structure are known, as are several "Bloom filter-like" data structures. A given data structure may comprise a bit array associated with one or more hash functions and may support the two basic "insert" and "query" operations described above, and yet may also support one or more *additional* data structure operations. For example, a "counting Bloom filter" is a Bloom filter variant which also supports a "delete" operation by which elements may effectively be "removed" from the data structure. As used herein, the term "Bloom filter" will be understood to encompass all such variants provided that they support at least the two essential operations of insertion and querying, regardless of whether they offer the option of additional functionality too.

Likewise, well-known equivalents of Bloom filters, and variants in which e.g. the insert and/or query operation takes more than one input parameter, will be known to those skilled in the art and recognised to be compatible with the computer-implemented methods of the present disclosure.

Fig. 3A depicts a process comprising two "insert" operations being performed on a Bloom filter. The Bloom filter is depicted as having an initial state 302, in which it is "empty" - that is, having every bit of the bit array set to a value of 0, indicating that no insert operations have yet been performed on the Bloom filter. A first insert operation 308 is applied to the Bloom filter using the string "cromulent" as its input. In the example depicted in Fig. 3A, the Bloom filter comprises eight bits and is associated with two hash functions *h*₁ and *h*₂, though in practice any array size and number of hash functions may be used depending on the desired trade-off between memory usage and false positive rate as described in more detail below. In the example depicted in Fig. 3A, positions in the Bloom filter are labelled from left to right starting from zero with an increment of one between each subsequent array position, though in practice any system for labelling positions in a bit array (e.g. from right to left and/or starting from a different integer) may be employed. The numbers labelling the array positions in Figs. 3A-3D are shown purely for illustrative purposes, and are not part of the Bloom filter's data content.

In a first step 310 of operation 308, the input string is hashed using *h*₁ to produce, as an output, the array position "1". Accordingly, the bit in position 1 of the array is changed from a zero (False) to a one (True). In a second step 312, the input string is hashed using *h*₂ to produce, as an output, the array position "5". Accordingly, the bit in position 5 of the array is changed from a zero (False) to a one (True). As a result of insert operation 308, the Bloom filter has transitioned from its first (empty) state 302 to a second state 304.

As shown in Fig. 3A, a second insert operation 314 is then applied to the Bloom filter (now in second state 304, with bits at positions 1 and 5 set to one/True, and all other bits set to zero/False), using the string "claggy" as its input. In a first step 316 of operation 314, the input string is hashed using *h*₁ to produce, as an output, the array position "4". Accordingly, the bit in position 4 of the array is changed from a zero (False) to a one (True). In a second step 318, the input string is hashed using *h*₂ to produce, as an output, the array position "1". Because the array already contains a value of one at position 1, this bit is not altered. As a result of the second insert operation 314, the Bloom filter has transitioned from second state 304 to a third state 306.

In the above example, the steps of computing the hashes for the input element and updating the corresponding positions in the array occur in a specific order, i.e. with the bit update at each position occurring in response to the corresponding hash function output being computed, before the operation moves on to compute the next hash function output, and so forth. However, it is not necessary for the insert operation to involve this specific ordering of steps. In some implementations, an insert operation may comprise firstly computing all of the hashes for a given input (i.e. array positions), and then subsequently updating each of these array positions to have a value of one. For example, insert operation 314 may compute the values *h*₁("claggy") = 4 and *h*₂("claggy") = 1 in a first step, and then set the values of bits 4 and 1 to one/True in a second step.

Fig. 3B depicts a query operation 320 being performed on a Bloom filter (specifically, the Bloom filter of Fig. 3A in third state 306) using the input string "cromulent". As in the insert operation 308, the input is hashed in steps 322, 324 using *h*₁ and *h*₂ to produce the hash outputs "1" and "5" respectively. The array is checked at positions 1 and 5 and it is determined that both positions are set to a one. This being the case, the result of the query operation is positive and a positive output is returned accordingly (denoted by a tick symbol in Fig. 3B).

In the illustrated example, this output may be considered a "true positive" in the sense that the queried element was one that had been previously inserted in the Bloom filter, leading to the positive query output being produced.

In a similar vein to the insert operations 308, 314 of Fig. 3A, the query operation 320 may comprise computing the first array position output by *h*₁, then checking said array position, then computing the second array position output by *h*₂, then checking said array position, and so forth. This may be a preferable order, as it allows the operation to "short-circuit", i.e. terminate with a negative query result as soon as one of the computed array positions is found to contain a zero, for greater efficiency. However, the order of these steps may nevertheless differ, and query operation 320 may e.g. begin by computing all of the array positions and then performing all of the bit checks in the array. Additionally or alternatively, the order in which the different hashes are computed may vary. In some cases, distributed, parallel or threaded/interleaved processing can be used to compute more than one hash concurrently.

Fig. 3C depicts a query operation 326 being performed on the same Bloom filter of Figs. 3A and 3B, in third state 306, this time using the input string "jury". This input is hashed in steps 328, 330 using *h*₁ and *h*₂ to produce the hash outputs "4" and "7" respectively. The array is checked at positions 4 and 7 and it is determined that the bit in position 7 is set to a zero. Since it is not the case that the computed array position for every hash function is set to one, the result of the query operation is negative, and a negative output is returned accordingly (denoted by a cross symbol in Fig. 3C). It can hence be determined that the Bloom filter does not "contain" this particular input string - that is, no insert operation has been performed on the Bloom filter using "jury" as input. As will be appreciated, the Bloom filter can never produce a "false" negative output, because bits in the array are only ever changed from zero to one, and not vice versa. Again, the precise order of computations in the query operation can vary in practice, in accordance with implementation choices.

Fig. 3D depicts a query operation 332 being performed on the same Bloom filter of Figs. 3A, 3B and 3C, in third state 306, this time using the input string "finagle". The input is hashed in steps 334, 336 using *h*₁ and *h*₂ to produce the hash outputs "5" and "4" respectively. The array is checked at positions 5 and 4 and it is determined that both positions are set to a one. This being the case, the result of the query operation is positive and a positive output is returned accordingly (denoted by a tick symbol in Fig. 3D).

In the illustrated example, this output may be considered a "false positive" in the sense that the queried element was not one that had been previously inserted in the Bloom filter (these being only the two strings "cromulent" and "claggy"). It is, of course, only possible to draw a meaningful distinction between a true positive and a false positive given some knowledge of the prior operations performed on a given Bloom filter. Without any such historical context, given only a Bloom filter's current state (i.e. an array of bits) and its associated hash functions, the result of any given query operation can be interpreted only as either an indication that an element is not "in" the Bloom filter (i.e. has not been inserted), or an indication that an element might be "in" the Bloom filter (i.e. might have been inserted).

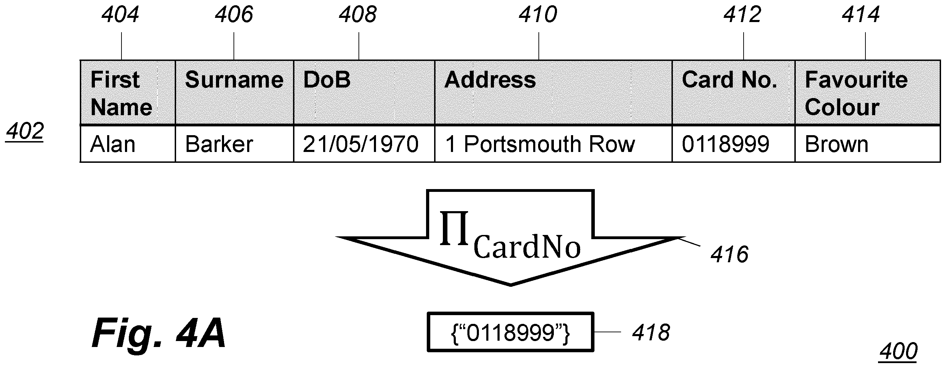

Reference is now made to Fig. 4A, which depicts an exemplary process 400 of sensitive data being extracted from a structured data item, using a mapping or projection. The structured data item is illustrated here as a record 402 comprising various fields 404, 406, 408, 410, 412 and 414, each of which contains a data value. Record 402 may be a row of a table in a database, for example a relational database. Additionally or alternatively, record 402 may comprise a set of key-value pairs. In some embodiments, the keys or fields of record 402 form part of the data content of record 402 itself. However, in other embodiments (such as the illustrated embodiment), record 402 consists solely of its values, which are ordered in accordance with a predetermined schema for the database or table.

The fields (i.e. the "columns" of a table containing record 402) may each be associated with a distinct data type, which may be defined e.g. by a schema. For instance, in the example of Fig. 4A, fields 404, 406, 410 and 414 (labelled "First Name", "Surname", "Address" and "Favourite Colour") may be associated with strings of alphanumeric characters; field 408 (labelled "DoB") may be associated with dates; and field 412 (labelled "Card No.") may be associated with numeral strings. Input sources for the structured data may be required to provide any new structured data in the data types corresponding to the schema, with attempts to input data with one or more incorrect types resulting in an error being raised. Data may also be required to pass one or more syntactic or semantic checks. For example, field 408 as depicted may require values to be representative of a date which is prior to the "current" date determined by the system processing the structured data (i.e. in the past).

In many cases, a structured data item might not consist solely of sensitive data. For instance, record 402 comprises a value for field 412 representing a card number, e.g. the PAN of a payment card such as a credit or debit card - this may well be a sufficiently sensitive element of record 402 that its disclosure would immediately qualify as an instance of data leakage. However, other fields such as field 414 of record 402 may fail to qualify as sensitive data, possibly by virtue of being trivial or inconsequential, or possibly by virtue of being already known within the public domain.

A function or map may be applied to a structured data item such as record 402 in order to extract sensitive data therefrom. For instance, Fig. 4A depicts sensitive data 418 being extracted in process 400 using a projection operation 416 applied to record 402. Projection 416 has the effect of mapping record 402 to an element of sensitive data it contains - that is, the value for the "Card No." field 412 - and ignoring the non-sensitive data.

Of course, in practice it may not be the case that every field of a structured data item can be straightforwardly classified as either containing "sensitive" or "non-sensitive" data. For instance, data contained in field 404 or 406 of record 402 may not, on its own, be considered highly sensitive; the disclosure of the first name of a single customer is unlikely to have catastrophic consequences for an organisation, particularly if the name is a common one among persons in the organisation's geographic region. The disclosure of a customer's first name and surname together in combination (fields 404, 406), however, may be more likely to be considered a data leakage than data contained in only one of fields 404 and 406. The combination of fields 404, 406 and 408 may be even more likely to be considered "sensitive", and a set of values for fields 404, 406, 408 and 410 together (i.e. a full name, address and date of birth of one of its customers) may be more likely still. That said, the purpose of this example is not to define what is and is not sensitive data; data sensitivity will depend on a number of factors. Moreover, although the present example relates to a financial entity and to financial data, it will be appreciated that the methods described herein any applicable for use by an entity in any field and handling data of any description, if some or all of those data are considered to be sensitive.

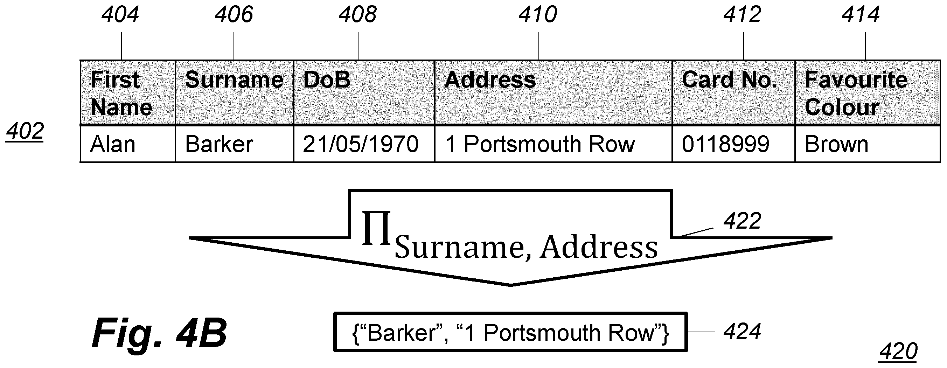

With this in mind, in some aspects of the present disclosure, extracting sensitive data for storage (or potentially-sensitive "candidate" data for inspection) may comprise using a map or projection to extract elements for a sensitive combination of fields of a structured data item, rather than just a single element for one sensitive field. With reference now to Fig. 4B, there is depicted an exemplary process 420 of sensitive data (this time comprising a combination of elements) being extracted from a structured data item, using a mapping or projection. A function or map may be applied to a structured data item such as record 402 in order to extract the sensitive data therefrom. For instance, Fig. 4B depicts sensitive data 424 being extracted in process 420 using a projection operation 422 applied to record 402. Projection 422 has the effect of mapping record 402 to a particular subset, sequence, tuple, list or other combination of elements of sensitive data that it contains (in the illustrated example, the values for the "Surname" and "Address" fields 406, 410).

The mapping or projection may extract a 1-element combination e.g. a set comprising just the data value for one field of the structured data item. The mapping or projection may extract a multi-element combination of elements/values. The mapping or projection may extract effectively the entire content of the structured data item, e.g. by extracting a combination comprising the values of every field for the data item.

In some applications of the present disclosure, it may be identified that there are a plurality of possible combinations of fields that could, when taken in combination, be construed as "sensitive" (i.e. fields whose values could, if leaked as a combination, represent an unacceptable breach for the organisation). In such cases, the step of generating one or more representations from extracted data as described in more detail below may comprise generating a new representation for every such combination. For example, it may be determined that the combination of any given customer's first name, surname and date of birth is sensitive, but also that the combination of any given customer's first name, surname and address is sensitive. When performing a method for enabling identification of data leakage in accordance with the present invention, two representations could be generated for a data item comprising sensitive data (e.g. record 402), one representing the name-and-date combination, and the other representing the name-and-address combination. Likewise, when performing a method for identifying data leakage in accordance with the present invention, two corresponding representations could be generated for a data item being checked, and subsequently queried against a first Bloom filter as described in more detail below.

Figs. 4A and 4B illustrate that a structured data item can be processed by applying the map or projection to obtain some or all of its sensitive data (or, if attempting specifically to identify data leakage, to obtain data from the field(s) or column(s) in which potentially-sensitive data is expected to appear). In some embodiments, however, normalisation, canonicalisation and/or formatting may be applied to some or all of the extracted data.

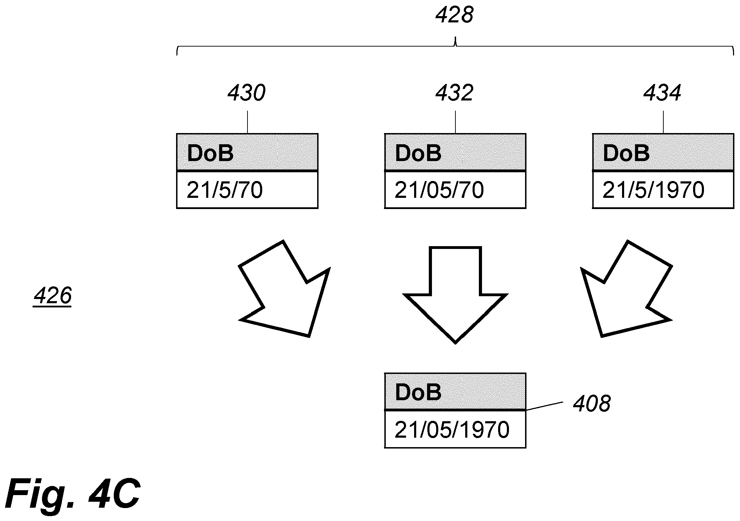

Fig. 4C depicts such a canonicalisation/normalisation/formatting process 426 (hereafter simply "normalising" or "normalisation"). Data extracted from a data item in one context might differ in form or syntax from data extracted from a data item in another context, even if the extracted data is identical in semantic content or meaning. For example, the number "one thousand" may appear in various forms as "1000", "1,000" or "01000", and the number "zero" may appear in various forms as "0.0", "0.000" and "-0.0". Alternatively, the date "21st May 1970" may appear in a first form 430, a second form 432, a third form 434 (collectively, unnormalised forms 428) or a predetermined normal form 408. A normalisation process 426 may be applied to extracted data in unnormalised forms 428 to convert it into the canonical normal form 408 determined for that field or data type. Consequently, normalisation process 426 (or any normalisation, canonicalisation or formatting process) can produce the advantageous effect that the same one or more sensitive data elements or sensitive combinations of data elements will be treated as being essentially identical during subsequent steps of the computer-implemented methods disclosed herein.

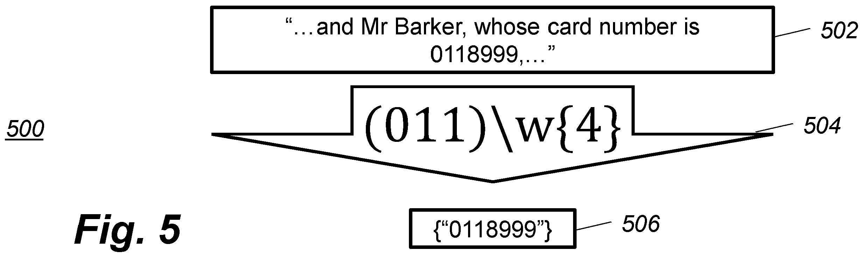

Referring now to Fig. 5, an exemplary process 500 of sensitive data being extracted from an unstructured data item is depicted. In contrast to structured data, which may be ordered in accordance with a predetermined form, unstructured data is data that is not required to adhere to any predetermined form or schema, and may be stored in a raw or native form. An unstructured data item may be, for instance, a text document (e.g. plain text, rich text or hypertext), an XML document, a JSON object, a webpage, a log, a media file or any other unstructured data item known to those in the art. In the illustrated example, process 500 is shown extracting sensitive data 506 from an unstructured data item 502 comprising English text, within which a sensitive numeral (specifically, a payment card number) appears.

Extracting a field or plurality of fields from the unstructured data item may comprise the use of one or more filters. The one or more filters may be configured to locate patterns and/or known data within the unstructured data item in order to output the sensitive (or potentially-sensitive) elements. For instance, in the example illustrated in Fig. 5, it may be known that all payment cards of a certain type have a unique seven-digit payment card number which must begin with the substring "011", followed by exactly four additional numerals. Any numeral following this format or pattern may therefore potentially be such a payment card number, and could therefore be sensitive data. A sensitive field can therefore be identified in unstructured data 502 and extracted therefrom by using a filter 504 based on a regular expression (regex) - specifically, the regular expression "(011)\w{4}" configured to identify strings of length 7 beginning with the substring "011".

Additionally or alternatively, one or more sensitive fields may be extracted from unstructured data by using a filter based on data that is known to occur within the unstructured data, e.g. a known string. In the example of Fig. 5, whilst not depicted, a filter based on the known string "card number is" could be used to extract sensitive data 506 from unstructured data item 502. Such a filter may be implemented based on regex.

Whilst not depicted in Fig. 5, the one or more filters may be used to extract a plurality of fields (e.g. a sensitive combination of fields) from the unstructured data, for instance by using more than one regular expression to find a plurality of patterns, known pieces of data, and/or other suitable regex targets. These fields may be used in the creation of representations of sensitive data or candidate data as described above in relation to Fig. 4B, in order to capture the sensitivity of certain combinations and relationships between fields.

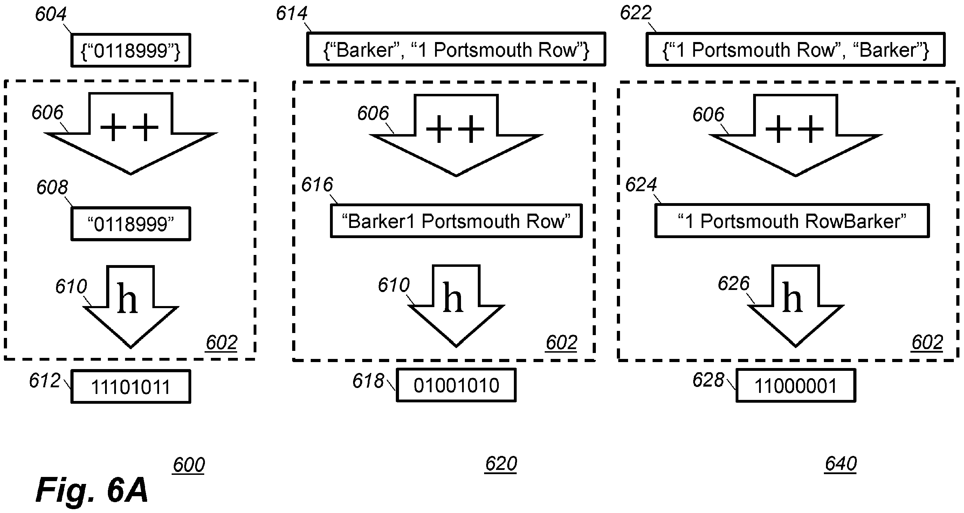

Referring now to Fig. 6A, there are depicted three processes 600, 620, 640 of generating a representation from extracted data using a mapping function 602. Mapping function 602 is configured to map inputs to hashes (in the form of arrays or strings of bits) using a concatenation function 606 and a hash function 610. Generally, in the present disclosure, the generated representation and the output of the mapping function may be one and the same. That is, the step of generating a representation from data using a mapping function may consist solely of feeding the data into the mapping function, and taking the resultant output as the representation. However, in other embodiments, the output of the mapping function may merely be used as input in the generation of the representation, with this generation comprising one or more further steps or additions. For instance, the generated representation may contain the output of the mapping function, with additional bits or characters appended.

Concatenation function 606 takes, as input, an ordered collection or set (i.e. a sequence, tuple, list, or the like) of elements which may, taken together, constitute sensitive data (or potentially-sensitive data that is to be checked in order to determine its sensitivity). Concatenation function 606 then produces, as its output, a string comprising the concatenated string representations of the input elements in order. If the input comprises only a single element, concatenation function 606 simply outputs the string representation of this element.

Hash function 610 may be any suitable hash function for mapping strings to any kind of hash output (in the illustrated example, an array or string of bits). Advantageously, hash function 610 may fulfil one or more of the following properties: pre-image resistance; second pre-image resistance; collision resistance; uniformity of output distribution; efficiency of com putation.

In first process 600, first extracted data 604 is provided as input to mapping function 602 in order to generate a representation. Mapping function 602 applies concatenation function 606 to first extracted data 604 in order to produce a first intermediate value 608. In this example, since first extracted data 604 comprises only a single element (the card number "0118999"), first intermediate value 608 is identical to this element. Mapping function 602 then applies hash function 610 to first intermediate value 608 to obtain first representation 612, which in this example is the bit string or bit array "11101011". First representation 612 may also be referred to as a "hash", given that it is the output of hash function 610.

In second process 620, second extracted data 614 is provided as input to mapping function 602 in order to generate a representation. Mapping function 602 applies concatenation function 606 to second extracted data 614 in order to produce a second intermediate value 616. In this example, this comprises concatenating the elements "Barker" and "1 Portsmouth Row" of second extracted data 614 to produce the string "Barker1 Portsmouth Row". Mapping function 602 then applies hash function 610 to second intermediate value 616 to obtain second representation 618, which in this example is the bit string or bit array "01001010". Second representation 618 may also be referred to as a "hash", given that it is the output of hash function 610.

In third process 640, third extracted data 622 is provided as input to mapping function 602 in order to generate a representation. Mapping function 602 applies concatenation function 606 to third extracted data 622 in order to produce a third intermediate value 624. In this example, this comprises concatenating the elements "1 Portsmouth Row" and "Barker" of third extracted data 622 to produce the string "1 Portsmouth RowBarker". Mapping function 602 then applies hash function 610 to third intermediate value 624 to obtain third representation 628, which in this example is the bit string or bit array "11000001". Third representation 628 may also be referred to as a "hash", given that it is the output of hash function 610.

It will be noted at this stage that, despite second extracted data 614 and third extracted data 622 consisting of exactly the same elements, mapping function 602 generates a different representation in each case, because the elements appear in a different order (which may be due to e.g. a change in the extraction process used to obtain one or the other of extracted data 614, 622, and/or a difference in the format or order of one/both of the data items from which they were extracted). It may therefore be advantageous to employ a mapping function which has the property that the order of elements in the extracted data does not make a difference to the representation produced, to allow such occurrences to be detected and thus improve the data leakage detection/prevention process overall.

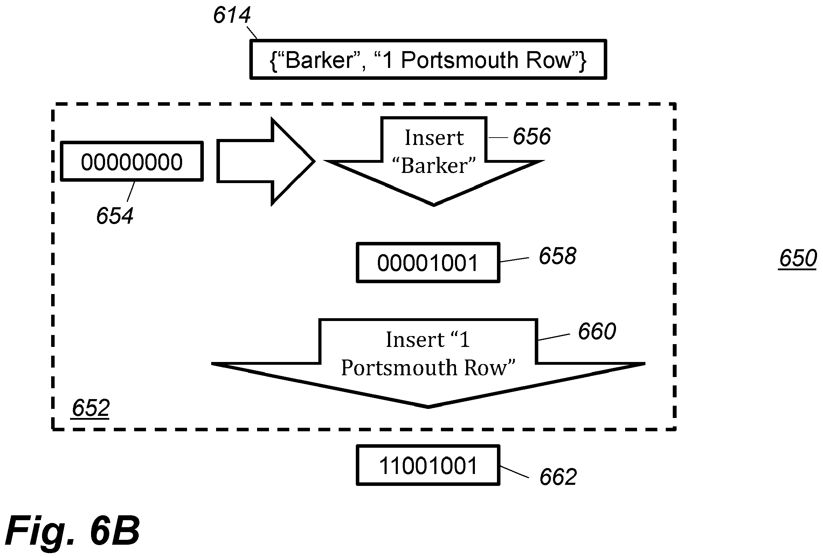

With reference now to Fig. 6B, there is depicted a process 650 of generating a representation from extracted data using an alternative mapping function 652. Mapping function 652 is configured to map inputs (comprising sensitive data or potentially-sensitive "candidate" data) to secondary Bloom filters. In this embodiment, a secondary Bloom filter is a representation. Specifically, in the illustrated example, mapping function 652 produces its output by inserting the candidate and/or sensitive data into an empty Bloom filter (e.g. by taking an empty Bloom filter and applying an insert operation for every element of the extracted data). Secondary Bloom filters with a particular bit array size and particular associated set of hash functions may be generated and used as representations of sensitive data by computer-implemented methods for enabling identification of data leakage disclosed herein. Subsequently, computer-implemented methods for identifying data leakage described herein may generate secondary Bloom filters having the same bit array size and same associated hash functions for use as representations of candidate data.

As shown in Fig. 6B, the second extracted data 614 of Fig. 6A is provided as input to mapping function 652 in order to generate a representation (i.e. secondary Bloom filter 662). Mapping function 652 applies a first insert operation 656 to an empty Bloom filter 654 using the first element of second extracted data 614 in order to place (what will be) the secondary Bloom filter in an intermediate state 658. In this example, this comprises inserting the string "Barker" of second extracted data 614 into empty Bloom filter 654, thus changing its bit array to "00001001" ("Barker" hashing to positions 4 and 7 by the first and second hash functions of the secondary Bloom filter). Mapping function 652 then applies a second insert operation 660 to the Bloom filter in intermediate state 658 using the next element from second extracted data 614 in order to obtain the representation, i.e. the final state for secondary Bloom filter 662, which in this example has the bit array "11001001" ("1 Portsmouth Row" hashing to positions 1 and 2 by the first and second hash functions of the secondary Bloom filter).

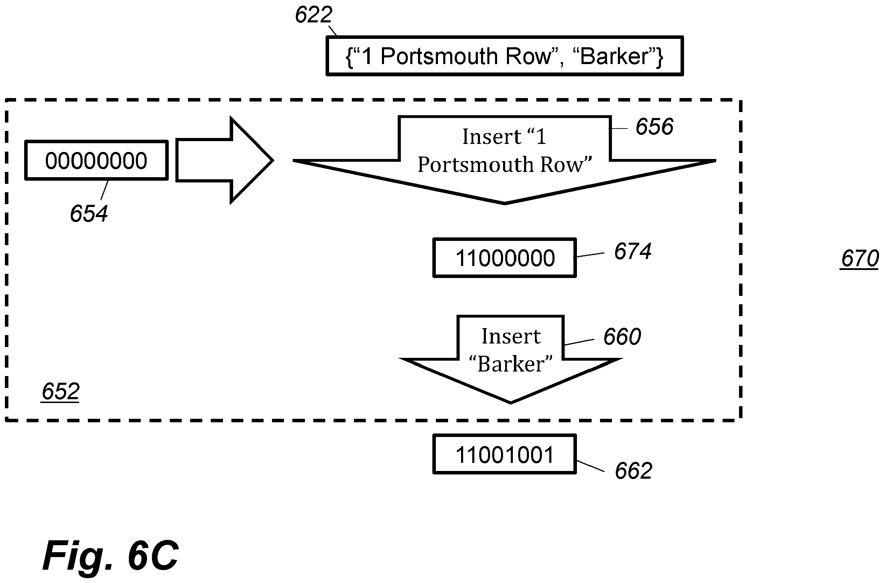

Fig. 6C depicts another process 670 of generating a representation from extracted data using the same alternative mapping function 652 of Fig. 6B. As shown in Fig. 6C, the third extracted data 622 of Fig. 6A is provided as input to mapping function 652 in order to generate a representation (i.e. secondary Bloom filter 662). Mapping function 652 once again applies first insert operation 656 to an empty Bloom filter 654 using the first element of third extracted data 622 in order to place (what will be) the secondary Bloom filter in an intermediate state 674. In this example, this comprises inserting the string "1 Portsmouth Row" of third extracted data 622 into empty Bloom filter 654, thus changing its bit array to "11000000". Mapping function 652 then applies second insert operation 660 to the Bloom filter in intermediate state 674 using the next element from third extracted data 622 in order to obtain the representation, i.e. the final state for secondary Bloom filter 662, which in this example is once again the bit array "11001001". As has been demonstrated, the use of mapping function 652 to generate one or more representations of extracted data by mapping inputs to secondary Bloom filters enables these representations to be "order-agnostic".

Mapping function 652 has been described above as performing a first insert operation, and then subsequently performing a second insert operation. However, those skilled in the art will readily understand that such a strict order of operations is not necessary to realise the benefit of the present disclosure, and that the insert operations may occur in any order; may occur in parallel, concurrently and/or simultaneously; and/or may occur in an "interleaved" manner (i.e. by first computing all of the array positions (hashes) and then subsequently performing the bit updates as has been described in more detail hereinabove).

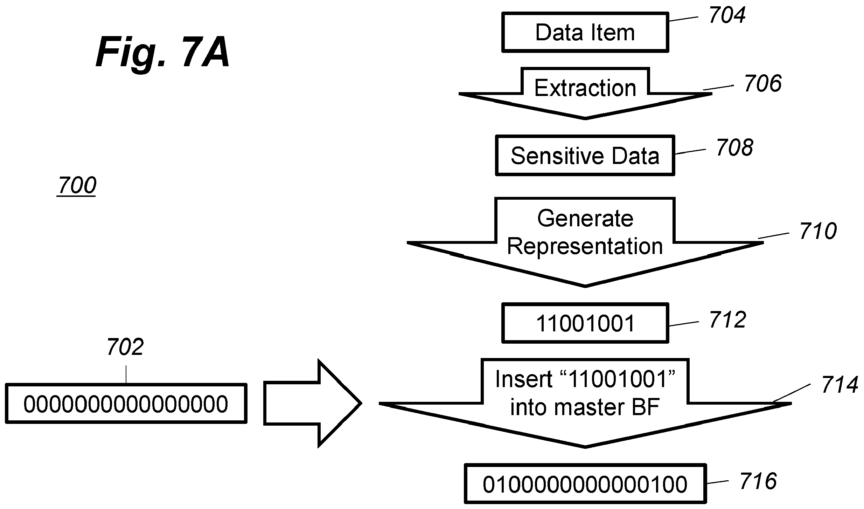

Reference is now made to Fig. 7A, which graphically depicts a computer-implemented method 700 for enabling identification of data leakage in accordance with an aspect of the present invention. Method 700 begins with a data item 704 comprising sensitive data. Data item 704 may be any item of structured or unstructured data including, but not limited to, any of the examples of structured data or unstructured data provided hereinabove. Sensitive data 708 identified in data item 704 is then extracted using an extraction process 706. Extraction process 706 may be any of the processes for extracting sensitive data from a data item described hereinabove, including but not limited to the use of one or more known mappings, projections, filters and/or regular expressions. The extracted sensitive data 708 may comprise a single element, i.e. a value for a single field, or may comprise a plurality of elements, i.e. values for a plurality of fields.

A representation 712 for extracted sensitive data 708 is then generated according to a process 710 using a suitable mapping function. The mapping function may be similar or identical to any of the mapping functions described hereinabove. For instance, the mapping function may map inputs to arrays or strings of bits or characters. The mapping function may map inputs to numbers, and/or may comprise a hash function (like mapping function 602 illustrated in Fig. 6A). The mapping function may in some embodiments map inputs to secondary Bloom filters - indeed, in the illustrated example representation 712 has been generated using mapping function 652 to produce a secondary Bloom filter comprising the bit array or string "11001001" in a similar manner to that depicted in Figs. 6B and 6C.

Subsequently, a first Bloom filter 716 (also described as a/the "master" Bloom filter) is constructed from representation 712. In the illustrated example, this comprises constructing an empty Bloom filter 702 and populating it by inserting representation 712 into empty Bloom filter 702. However, in some embodiments, constructing first Bloom filter 716 from representation 712 comprises starting with an existing Bloom filter in place of empty Bloom filter 702, and updating it by inserting representation 712 into the existing Bloom filter. For example, the existing Bloom filter may be an instance of the first/master Bloom filter at a given point in time, and constructing the "new" first/master Bloom filter may thus comprise performing the insert operation to update the state of the first Bloom filter by adding representation 712 to its contents. In order to improve the efficacy of the system the parameters of the Bloom filters (including the first Bloom filter and any secondary Bloom filters) may be tuned based on the desired trade-off between memory requirements, and the required threshold for occurrence of false positives when querying the filter. For example, for a first Bloom filter "containing" 100,000,000 elements, that uses seven hash functions, and an array of 10,000,000,000 bits (1.16Gigabits = 145 Megabytes), the probability of a false positive resulting from a query is 0.0000006%, or 1 in 154,915,622.

In various real-world applications of the present invention, operations 710 and 714 may be repeated for each sensitive combination of data elements that is identified among the extracted data 708, leading to a representation per each one of these combinations being inserted into the first Bloom filter. This enables the subsequent identification of any of these combinations, e.g. by employing one or more of the methods for identifying data leakage described herein. In such cases, the sensitive data used as input to the mapping function for any given representation being generated need not comprise the entirety of extracted data 708. For example, one or more of the representations may be generated by providing just a subset of the extracted data (corresponding to a sensitive combination of fields) as input to the mapping function.

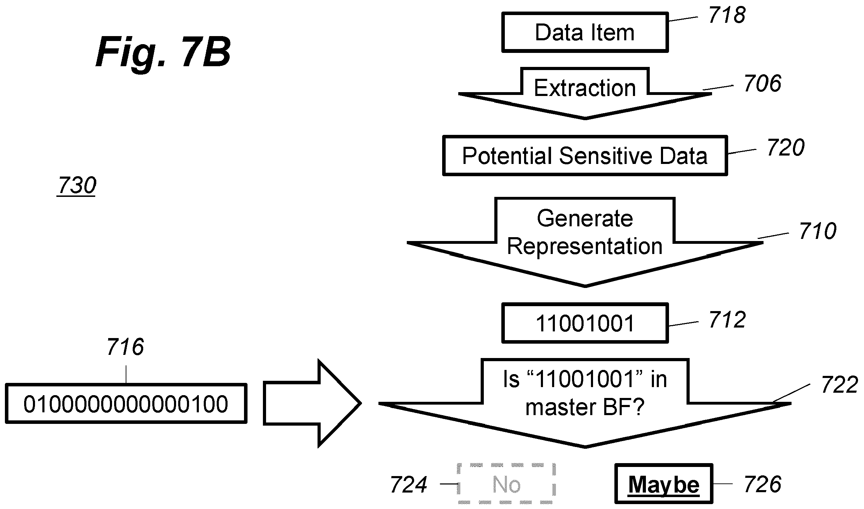

Reference is now made to Fig. 7B, which graphically depicts a computer-implemented method 730 for identifying data leakage in accordance with an aspect of the present invention. Method 730 begins with a first Bloom filter 716 formed from a plurality of representations of sensitive data that have been generated from the underlying sensitive data using a mapping function, and a data item 718. In the illustrated example, first Bloom filter 716 is the same first Bloom filter that was constructed with reference to Fig. 7A.

The data item may be known to contain potentially-sensitive "candidate" data that is to be checked for determination as to its sensitivity (or, in some cases, its non-sensitivity). Data item 718 may be any item of structured or unstructured data including, but not limited to, any of the examples of structured data or unstructured data provided hereinabove. Candidate data 720 identified in data item 718 is then extracted using the same extraction process 706 used in the process 700 depicted in Fig. 7A as part of the construction of first Bloom filter 716. The extracted candidate data 720 therefore may again comprise a single element, i.e. a value for a single field, or may comprise a plurality of elements, i.e. values for a plurality of fields, as dictated by extraction process 706.

A representation 712 for extracted candidate data 720 is then generated according to the same representation process 710 used in the process 700 depicted in Fig. 7A, i.e. using the same mapping function. In the illustrated example, representation 712 is generated using mapping function 652 to produce a secondary Bloom filter comprising the bit array or string "11001001" once again.

Subsequently, a membership query in first Bloom filter 716 is performed for representation 712, using the standard Bloom filter query operation (as described in detail in relation to Figs. 3B-3D). In the illustrated example, this would comprise hashing representation 712 ("11001001") using each of the hash functions associated with first Bloom filter 716, and checking whether each of the resulting array positions output by the hash functions are set to a value of 1/True in first Bloom filter 716. If so, the query returns a positive output 726, indicating potential membership of the representation in the first Bloom filter (i.e. suggesting a likelihood that the representation has been inserted into first Bloom filter 716, even if this cannot be known for certain). Otherwise, the query returns a negative output 724, proving non-membership of the representation for first Bloom filter 716.

In various real-world applications of the present invention, operations 710 and 722 may be repeated for each potentially-sensitive combination of data elements among the extracted data 720, leading to a representation per each one of these combinations being queried against the first Bloom filter. This ensures that if the data item contains *any* sensitive combination of elements, each and every such combination will be discovered when querying its respective representation against first Bloom filter 716, provided that corresponding steps were taken during the construction of first Bloom filter 716 to insert each of these representations as described above. In such cases, the sensitive data used as input to the mapping function for any given representation being generated need not comprise the entirety of extracted data 720. For example, one or more of the representations may be generated by providing just a subset of the extracted data (corresponding to a sensitive combination of fields) as input to the mapping function.

In accordance with positive result 726, process 730 can further comprise outputting an alert. The alert may prompt a human user of a computing system, and/or an automated program running on a computer system, to investigate data item 718 further. The alert may indicate that data item 718 is likely to comprise sensitive data. The alert may indicate a quantitative estimate of the likelihood that data item 718 comprises sensitive data. The quantitative estimate may be computed based on the number of bits in the bit array of first Bloom filter 716 and the number of associated hash functions for first Bloom filter 716. Optionally, the quantitative estimate may be computed based on the number of bits in the bit array of first Bloom filter 716, the number of associated hash functions for first Bloom filter 716, and the number of bits in the bit array of first Bloom filter 716 that are known to be set to 1. The alert may trigger a subroutine on the computing device that prevents or interrupts a process of exporting or sending data item 718.

Optionally, in accordance with a negative result 724 of membership query 722 for (all of) the representation(s), indicating no membership of the representation(s) in the first Bloom filter, process 730 may send data item 718 and/or extracted candidate data 720 to another computer via a network. This can be done with at least some degree of confidence, because the negative result proves that candidate data 720 cannot have been used as sensitive data 708 in the construction of first Bloom filter 716.

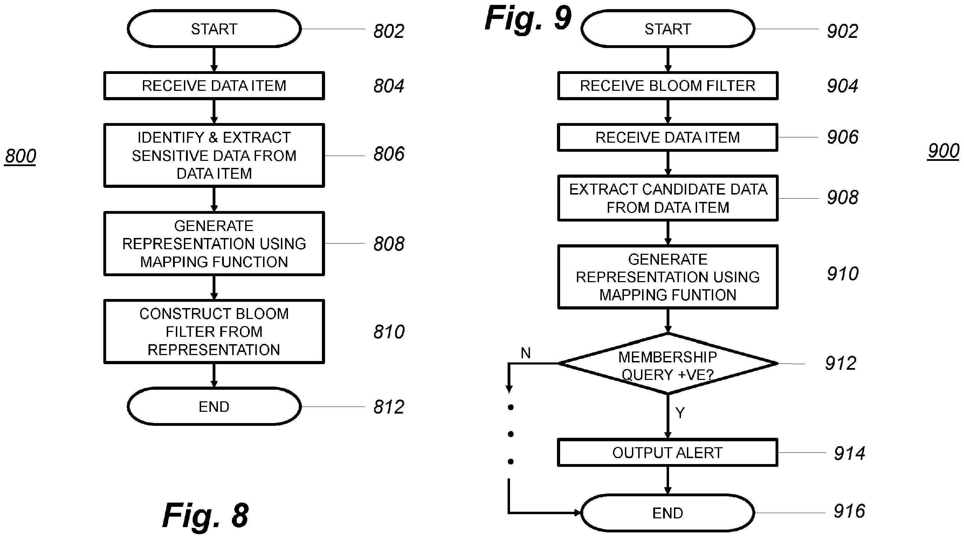

Referring now to Fig. 8, a computer-implemented method for enabling identification of data leakage is depicted, in accordance with an embodiment of the present invention. The method is initiated at step 802.

In step 804, a data item may be received at a terminal, as described elsewhere herein. The data item may be received via a wired connection or via a wireless communications protocol, as described herein, or any other means as will be apparent to a person skilled in the art. The data item may be transmitted from a secure storage location housing sensitive data. The data item may be kept secure during transmittal by encryption of the data item before transmitting, and subsequent decryption once at its destination. Alternatively, the method may take place within a hardware security module (HSM). In yet further alternatives, all of steps 802 to 812 may take place within the same computational environment, for example a secure cloud server on which the data item is stored. The data item may be analysed immediately, i.e., steps 806 onwards may proceed upon reception of the data item. Alternatively, the received data item may be stored, optionally with other received data items, and steps 806 onwards performed at a later time.

In step 806, sensitive data is identified and extracted from the data item. Methods for identification and extraction of sensitive data are described in Figures 4A to 4C, and Figure 5, but other methods of identification and extraction may be used. It may be identified that the entire received data item contains sensitive data. In this case, the entire received data item may be used to generate one or more representations. In such cases, extracting the identified sensitive data from the data item may comprise no more than passing the entire received data item to the step of generating a representation and/or retrieving the entire data item from a location in which it is stored.

In step 808, a representation is generated from the extracted identified sensitive data using a mapping function. The mapping function may be any manipulation of the extracted identified sensitive data providing a binary output. Exemplary mapping functions suitable for use in step 808 are depicted in Figures 6A to 6C, although it will be appreciated that these are exemplary only, and that other functions are suitable.

In step 810, a Bloom filter is constructed from the representation. The construction of a Bloom filter is depicted in Figure 3A. This Bloom filter may be referred to as a first Bloom filter. If no first Bloom filter yet exists at the initiation of step 810, an "empty" Bloom filter is first constructed. As described with reference to Figure 3A, an empty Bloom filter comprises an array of bits, each set to zero. Constructing the first Bloom filter may therefore comprise generating a suitably sized array of bits set to zero, and then inserting the representation into the empty Bloom filter as described with reference to "cromulent" and "claggy".

It will be appreciated that steps 802 to 812 are the same steps used if a first Bloom filter exists prior to step 810. In other words, if there exists either an "empty" Bloom filter or a Bloom filter already populated with one or more representations. In such cases, step 810 comprises constructing a Bloom filter insofar as the data comprised within the Bloom filter has been updated, because the bit array which forms the first Bloom filter may have changed by virtue of the latest representation being inserted. Of course, it is possible that the insertion of a representation does not, in fact, change the first Bloom filter (if the representation to be inserted corresponds to bits in the Bloom filter's bit array which are already set to 1). This is still considered to be comprised within step 810.

At step 812, the method with respect to the received data item ends. It will be appreciated that multiple instances of steps 802 to 812 may be taking place simultaneously, and with respect to different received data items. The order-agnostic nature of a Bloom filter is such that representations can be generated and inserted into the first Bloom filter in any order, including simultaneously, and the final version of the first Bloom filter will not be affected.

Referring now to Fig. 9, a computer-implemented method for identifying data leakage is depicted, in accordance with an embodiment of the present invention. The method is initiated at step 902.

In step 904, a Bloom filter is received. The Bloom filter has been formed, prior to step 902, from a plurality of representations of sensitive data, wherein the plurality of representations have been generated from the underlying sensitive data using a mapping function. The Bloom filter received at step 904 may be referred to as a first Bloom filter and/or master Bloom filter, and may have been constructed in the same or a similar manner to that described in relation to Figure 8.

In step 906, a data item may be received at a terminal, as described elsewhere herein, in the same or a similar manner to that described in step 804. The data item may be received via a wired connection or via a wireless communications protocol, as described herein, or any other means as will be apparent to a person skilled in the art. The data item may be transmitted from a secure storage location housing sensitive data. The data item may be kept secure during transmittal by encryption of the data item before transmitting, and subsequent decryption once at its destination. Alternatively, the method may take place within a hardware security module (HSM). In yet further alternatives, all of steps 902 to 916 may take place within the same computational environment, for example a secure cloud server on which the data item is stored. The data item may be analysed immediately, i.e., steps 908 onwards may proceed upon reception of the data item. Alternatively, the received data item may be stored, optionally with other received data items, and steps 806 onwards performed at a later time.

In step 908, candidate data is identified and extracted from the data item. Methods for identification and extraction of candidate data may be the same or similar to those methods for identification and extraction of sensitive data, as described in Figures 4A to 4C, and Figure 5, and as described in relation to step 806. It may be identified that the entire received data item contains candidate data. In this case, the entire received data item may be used to generate one or more representations. In such cases, extracting the identified candidate data from the data item may comprise no more than passing the entire received data item to the step of generating a representation and/or retrieving the entire data item from a location in which it is stored.

In step 910, a representation is generated from the extracted identified candidate data using a mapping function, in the same or a similar manner as described in relation to step 808. In principle, the mapping function may be any manipulation of the extracted identified candidate data providing a binary output. Exemplary mapping functions suitable for use in step 808 are depicted in Figures 6A to 6C, although it will be appreciated that these are exemplary only, and that other functions are suitable. However, in this case, in order that the representation generated has any relevance to the first Bloom filter, the mapping function used to generate the representation of the candidate data must be the same mapping function as was used to produce the representations fed into the first Bloom filter, received at step 904. The mapping function used to produce the representations fed into the first Bloom filter may be known to the processor performing step 910, for example stored in memory accessible to the processor. The mapping function may also be received with the first Bloom filter itself in step 904, as a separate data item or as metadata associated with the first Bloom filter.

In step 912, a membership query is performed on the first Bloom filter, to generate one of two outputs: i) the representation (generated from the candidate data) does not exist in the first Bloom filter; or ii) the representation (generated from the candidate data) may exist in the first Bloom filter. It may be said that to 'exist' in the first Bloom filter is to have been 'introduced' into the first Bloom filter. The membership query may be performed in the same manner as described in relation to step 722 of Figure 7B.

If the result of step 912 is output i), indicating that the representation generated from the candidate data does not exist in the first Bloom filter, the method ends at step 916. Step 916, when reached following a negative membership query, may comprise outputting an indication of the negative membership query for human analysis. Additionally, or alternatively, if the data item received in step 906 has been held from leaving a secure environment, pending a sensitivity check, step 916 (following a negative membership query) may comprise transmitting an instruction to release the data item for transmission from the secure environment and/or flagging the data item as not sensitive.

If the result of step 912 is output ii), indicating that the representation generated from the candidate data may exist in the first Bloom filter, the method proceeds to step 914.

In step 914, an alert is output, the alert signifying that the data item may be a sensitive data item. The alert may be transmitted to a user device, for example as a notification and/or display item, prompting further analysis. Alternatively, or additionally, step 914 may comprise transferring the relevant data item to a storage location pending further review. Step 914 may flag the relevant data item as being potentially sensitive pending further review; this flag may prevent transmission of the data item from the secure environment in the future, until a further review removes the flag.

Although the methods described throughout use financial customer data as an example of a field in which data may be sensitive, it will be appreciated that the methods described herein are not intended to be limited to particular forms or content of data. Methods described herein are advantageous for preventing data leakage of any sensitive data. By way of example, the security of proprietary technical information could be maintained by use of the present methods. Many other suitable applications for the claimed methods will be apparent to a person skilled in the art.

The term "comprising" encompasses "including" as well as "consisting" e.g. a composition "comprising" X may consist exclusively of X or may include something additional e.g. X + Y.

Unless otherwise indicated each embodiment as described herein may be combined with another embodiment as described herein.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, hard-drives, thumb drives, memory cards, etc. and do not include propagated signals. The software can be suitable for execution on a parallel processor or a serial processor such that the method steps may be carried out in any suitable order, or simultaneously. This acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilizing conventional techniques known to those skilled in the art that all, or a portion of the software instructions may be carried out by a dedicated circuit, such as a DSP (Digital Signal Processor), programmable logic array, or the like.

It will be understood that the benefits and advantages described above may relate to one embodiment or may relate to several embodiments. The embodiments are not limited to those that solve any or all of the stated problems or those that have any or all of the stated benefits and advantages.

The steps of the methods described herein may be carried out in any suitable order, or simultaneously where appropriate. Additionally, individual steps may be deleted from any of the methods without departing from the scope of the subject matter described herein. Aspects of any of the examples described above may be combined with aspects of any of the other examples described to form further examples without losing the effect sought. Any of the steps or processes described above may be implemented in hardware or software.

It will be understood that the above descriptions of preferred embodiments are given by way of example only and that various modifications are possible within the scope of the appended claims and may be made by those skilled in the art. Although various embodiments have been described above with a certain degree of particularity, or with reference to one or more individual embodiments, those skilled in the art could make numerous alterations to the disclosed embodiments without departing from the scope of this invention.

## Claims

1. A computer-implemented method for identifying data leakage, comprising:
receiving a first Bloom filter formed from a plurality of representations of sensitive data, wherein the plurality of representations have been generated from the underlying sensitive data using a mapping function;
receiving a data item for determination as to its sensitivity;
extracting candidate data from the data item;
generating one or more representations from the extracted candidate data, using the mapping function; and
for each representation of the one or more representations:
performing a membership query for the representation in the first Bloom filter; and
in accordance with a positive result of the membership query, outputting an alert signifying that the data item may be a sensitive data item.

2. A computer-implemented method for enabling identification of data leakage, comprising:
receiving a data item;
identifying sensitive data within the data item;
extracting the identified sensitive data from the data item;
generating a representation from the extracted identified sensitive data using a mapping function; and
constructing a first Bloom filter from the representation.

3. The method of claim 1 or claim 2, wherein each representation generated using the mapping function comprises an output of the mapping function, and wherein:
the mapping function maps inputs to bit strings;
the mapping function maps inputs to character strings; or
the mapping function maps inputs to numbers; optionally wherein the mapping function comprises a hash function.

4. The method of any preceding claim, wherein each representation generated using the mapping function comprises an output of the mapping function, and wherein the mapping function maps inputs to secondary Bloom filters, optionally wherein the mapping function produces each secondary Bloom filter from the candidate and/or sensitive data by inserting it into an empty Bloom filter.

5. The method of any preceding claim, further comprising:
in accordance with a negative result of the membership query for all of the representations, indicating no membership of the representations in the first Bloom filter, sending the data item and/or extracted candidate data to another computer via a network.

6. The method according to any preceding claim, further comprising one or more of:
saving the first Bloom filter to a memory;
distributing the first Bloom filter to another computer via a network; or
retrieving the first Bloom filter in response to a user request.

7. The method of any preceding claim, wherein the data item comprises structured data, and wherein extracting data from the data item comprises extracting one or more fields from the structured data using an extraction function based on a known mapping.

8. The method of any preceding claim, wherein the data item comprises unstructured data, and wherein extracting data from the data item comprises extracting one or more fields from the unstructured data using one or more filters based on regular expressions.

9. The method of claim 7 or claim 8, wherein each representation generated from the extracted data corresponds to one of the one or more fields.

10. The method of claim 7 or claim 8, wherein each representation generated from the extracted data corresponds to more than one field of the one or more fields.

11. The method of claim 2, wherein constructing the first Bloom filter from the representation comprises either:
constructing an empty Bloom filter and populating it by inserting the representation into the empty Bloom filter; or
updating an existing Bloom filter by inserting the representation into the existing Bloom filter.

12. The method of any preceding claim, further comprising, prior to generating the representation or representations:
canonicalizing the extracted data;
normalising the extracted data; and/or
formatting the extracted data.

13. A computer-implemented method for identifying data leakage, comprising the steps of claim 1 and the steps of claim 2, wherein the mapping functions are the same mapping function, and the first Bloom filters are the same Bloom filter.

14. A data processing apparatus comprising a processor configured to perform the steps of any preceding claim.

15. A computer program comprising instructions which, when the program is executed by a computer, cause the computer to carry out the steps of any one of claims 1 to 13.

16. A computer-readable storage medium having stored thereon the computer program of claim 15.
